# EUROPEAN PATENT SPECIFICATION

(11) **EP 3 982 077 B1**
(45) Date of publication and mention of the grant of the patent: **25.12.2024**
(21) Application number: 20846619.3
(22) Date of filing: 28.07.2020
(51) Int. Cl.: F28F 19/04, F24F 13/30, F28D 19/04, C01G 9/02, F28F 13/18, F28F 19/02

(54) **HEAT EXCHANGER AND MANUFACTURING METHOD THEREFOR, AND HEAT EXCHANGE SYSTEM**
WÄRMETAUSCHER UND HERSTELLUNGSVERFAHREN DAFÜR UND WÄRMETAUSCHERSYSTEM
ÉCHANGEUR DE CHALEUR ET SON PROCÉDÉ DE FABRICATION, ET SYSTÈME D'ÉCHANGE DE CHALEUR

(30) Priority: 01.08.2019 CN 201910709088
(43) Date of publication of application: 13.04.2022
(73) Proprietor: Hangzhou Sanhua Research Institute Co., Ltd., Hangzhou, Zhejiang 310018 (CN)
(72) Inventor: ZHOU, Jing, Hangzhou, Zhejiang 310018 (CN); HUANG, Hai, Hangzhou, Zhejiang 310018 (CN); HUANG, Linjie, Hangzhou, Zhejiang 310018 (CN)
(74) Representative: dompatent von Kreisler Selting Werner - Partnerschaft von Patent- und Rechtsanwälten mbB
(86) International application number: PCT/CN2020/105112
(87) International publication number: WO 2021/018125

(56) References cited:
- EP-A1- 2 172 729
- WO-A1-2006/082905
- WO-A1-2010/092875
- WO-A1-2018/047971
- CN-A- 101 839 591
- CN-A- 102 226 665
- CN-A- 106 847 673
- CN-A- 107 385 420
- CN-U- 202 494 207
- JP-A- 2006 138 567
- JP-A- H10 286 460

## Description

### TECHNICAL FIELD

This application relates to a field of heat exchange, and specifically to a heat exchanger and a heat exchange system having the heat exchanger

### BACKGROUND

In related technologies, due to low surface temperature of heat exchangers in the operation of heat exchange systems, when the temperature is lower than the dew point temperature, condensed water may be generated on a surface, and even frost may form, thereby affecting the heat exchange efficiency of the heat exchangers. Therefore, related heat exchangers need dehumidification treatment. In related technologies, the surface of the heat exchanger is treated with a lithium salt desiccant or a silica gel hygroscopic material. However, the lithium salt desiccant is not friendly to metal surfaces, and the silicone hygroscopic material is not sticky. Therefore, it is necessary to add an additional adhesive to make it adhere to the surface of the heat exchanger. In summary, the heat exchanger in the related technologies needs to be improved.

### SUMMARY

A heat exchanger according to the present invention is provided according to independent claim 1.

According to another aspect of the present disclosure, a heat exchange system is provided. The heat exchange system comprises a compressor, at least one first heat exchanger, a throttling device and at least one second heat exchanger. At least partial surface of the first heat exchanger and/or the second heat exchanger is covered with a hygroscopic colloid. When a refrigerant flows in the heat exchange system, the refrigerant flows into the first heat exchanger through the compressor, flows into the throttling device after heat exchange occurs in the first heat exchanger, then flows into the second heat exchanger and flows into the compressor again after heat exchange occurs in the second heat exchanger.

At least partial surface of the heat exchanger of the present disclosure is covered with a hygroscopic colloid material. The hygroscopic colloidal material can be directly covered on a metal surface due to its adhesiveness to the metal surface, and the hygroscopic colloidal material is friendly to metal surfaces.

### BRIEF DESCRIPTION OF DRAWINGS

FIG. 1 is a schematic diagram of a preparation process of a zinc oxide gel according to an embodiment of the present disclosure;
FIG. 2 is a schematic diagram of a comparison of moisture absorption performance of the zinc oxide gel according to the embodiment of the present disclosure in FIG. 1 and other three moisture absorption materials;
FIG. 3 is a schematic diagram of a desorption performance comparison between the zinc oxide gel according to the embodiment of the present disclosure in FIG. 1 and other three hygroscopic materials;
FIG. 4 is a schematic structural view of a heat exchanger covered with a hygroscopic colloid on its surface according to an embodiment of the present disclosure;
FIG. 5 is a schematic structural view of the heat exchanger of the embodiment in FIG. 4 from another angle;
FIG. 6 is a partial enlarged schematic view of area A of the heat exchanger in the embodiment of the present disclosure in FIG. 4;
FIG. 7 is a schematic structural view of a partial coating of a fin in the heat exchanger according to an embodiment of the present disclosure;
FIG. 8 is a schematic structural view of a heat exchange tube and the fins of the heat exchanger in the embodiment of the present disclosure;
FIG. 9 is a schematic view of another fin before and after coating of the heat exchanger of the embodiment of the present disclosure;
FIG. 10 is a schematic view of another fin before and after coating of the heat exchanger according to the embodiment of the present disclosure;
FIG. 11 is a schematic structural view of the heat exchanger according to another embodiment of the present disclosure;
FIG. 12 is a schematic structural view of the heat exchanger according to another embodiment of the present disclosure; and
FIG. 13 is a schematic view of an exemplary heat exchange system of the present disclosure.

### DETAILED DESCRIPTION

Here, exemplary embodiments will be described in detail, and examples thereof are shown in the drawings. When the following description refers to the drawings, unless otherwise indicated, same numbers in different drawings indicate the same or similar elements. The embodiments described in the following exemplary embodiments do not represent all implementation embodiments consistent with the present disclosure. On the contrary, they are only examples of devices and methods consistent with some aspects of the present disclosure as described in detail in the accompanying claims.

The exemplary embodiments of the present disclosure will be described in detail below with reference to the drawings. In the case of no conflict, the following embodiments and features in the implementation can be combined with each other.

Related heat exchangers, especially in air conditioning systems, when used as an evaporator during system operation, due to their low surface temperature, condensed water may be generated on the outer surface of the heat exchanger, which may even further cause frosting. However, the generation of condensed water or frost will cause the heat exchange efficiency of the heat exchanger to decrease, thereby making it difficult for the heat exchanger to exert better heat exchange performance. Hence, it is necessary to avoid condensed water or frost on the outer surface of the heat exchanger. One way is to bond hygroscopic or desiccant materials on the surface of the heat exchanger, such as silica gel and its physical or chemical compound desiccant, so as to reduce the impact of the wet load on the air conditioning systems. However since silica gel itself is not sticky, it is necessary to spray a layer of adhesive on the surface of the heat exchanger first. The adhesive can bond silica gel or its physical or chemical composite desiccant material to the metal surface. Since silica gel has a porous structure, the use of a binder will cause the micropores of silica gel to be blocked, thereby reducing moisture absorption. Moreover, the use of adhesives may also be detrimental to the heat exchange of the heat exchanger. In addition, the moisture absorption of silica gel itself (about 0.35 g/g) is relatively small. Although halogen salts and silica gel can be used in heat exchangers, the moisture absorption performance is greatly improved, but after the halogen salts absorb moisture, electrochemical corrosion will occur on the metal surface, which shortens the life of the heat exchanger.

An embodiment of the present disclosure provides a heat exchanger which is simple to manufacture. The outer surface of the heat exchanger is covered with a hygroscopic colloid. Due to the viscosity of the hygroscopic colloid itself, the fluidity of the gel after drying is not strong. Therefore, no additional binder is required. At room temperature, a pH value of the hygroscopic colloid is between 6 to 8, and it can be directly coated on a metal surface, such as a surface of aluminum or copper, and it is friendly to the metal surface. The hygroscopic colloidal material has a large moisture absorption capacity, which is better than silica gel and its composite materials. Inventors believe that the solute properties of the hygroscopic colloidal material are stable. For example, the solute of the zinc oxide gel is the metal oxide zinc oxide, and the solute material is more friendly to metals, especially copper or aluminum. At the same time, metal oxides such as zinc oxide have good thermal conductivity, and their covering on the surface of the heat exchanger can also relatively reduce the influence of the adhesive on the heat exchange performance of the heat exchanger.

The application of zinc oxide gel material to heat exchanger dehumidification effectively solves the problems of low moisture absorption of existing materials and the need for binders. The embodiment of the present disclosure provides a heat exchange system including the heat exchanger. The heat exchanger can be used as an evaporator in a heat pump air conditioning system. It is easy to understand that, in addition to being used as a heat exchanger in a heat pump system, the heat exchanger can also be used in other occasions where heat is exchanged with air. There is no restriction here.

The hygroscopic colloid covered by the heat exchanger of this embodiment includes but is not limited to zinc oxide gel. This embodiment takes zinc oxide material as an example. Of course, according to the rules of the periodic table and the periodic law of the elements, for example, the sol material formed by the same group of elements or elements near the diagonal also has similar properties, and is also within the protection scope of the present disclosure.

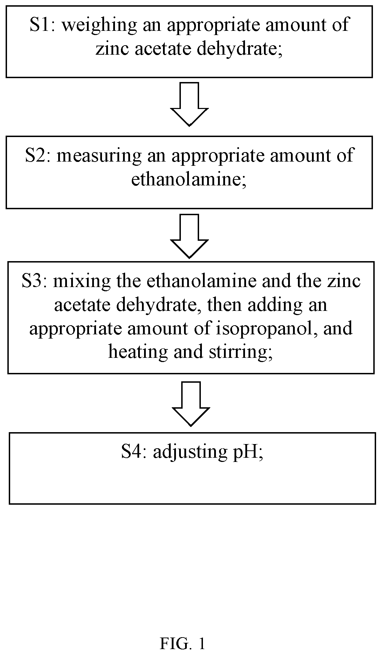

FIG. 1 shows a preparation flow chart of a zinc oxide gel of a method for making zinc oxide gel, which includes the following steps:

S1: weighing 21.9g of zinc acetate dihydrate, of which the molecular formula is Zn(CH₃COO)₂·2H₂O, used as a main raw material for the reaction in order to provide the source of zinc;

S2: measuring 6ml ethanolamine, of which the molecular formula is H₂N(CH₂)₂OH, used to stabilize zinc acetate dihydrate from decomposition in the air;

S3: mixing the zinc acetate dihydrate in the step S1 with the ethanolamine in the step S2 in a mixture; then, adding 200ml of isopropanol to the mixture, of which the molecular formula is (CH₃)₂CHOH, used to dissolve the zinc acetate dehydrate; and reacting with the zinc acetate dihydrate under heating at 70°C;

S4: after the solution in the step S3 gradually becomes transparent, adding sodium bicarbonate to adjust the pH to 6 to 8.

A reaction equation of the above reaction is:

4Zn(CH₃COO)₂·2H₂O→Zn₄O(CH₃COO)₆ + 7H₂O+CH₃COOH

CH₃COOH+NaHCO₃→CH₃COONa+H₂O+CO₂ ↑

It should be noted that in the step S4, to adjust the pH value, some salts that are weakly alkaline after hydrolysis, such as sodium bicarbonate, or weak bases, such as ammonia can be selected. In this way, it is convenient to control the pH value to a required pH value. Among them, the heating temperature in the step S3 can be 40°C to 100°C, for example, it can be heated at 70°C. The heating method can be water bath heating or direct heating. In this way, it is beneficial to accelerate the dissolution of zinc acetate dihydrate. The stirring speed can be selected from 200 to 600 r/min. In this embodiment, the stirring speed is 300 r/min.

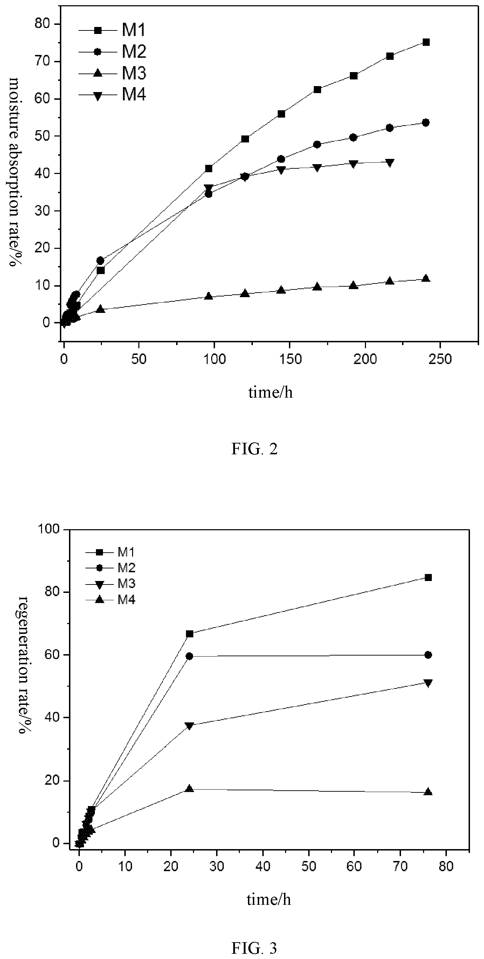

FIG. 2 shows a schematic diagram of a comparison of the moisture absorption properties of zinc oxide gel and other three materials. Among them, M1 is zinc oxide gel material, M2 and M3 are respectively mesoporous silica gel (pore size is about 4nm to 7nm) and macroporous silica gel (pore size is about 7nm to 10nm), and M4 is a silica gel/glycerol composite material. The moisture absorption is defined as the percentage of the water absorbed by a certain mass of the material to the same mass without water absorption. As shown in the figure, the test was performed at 20°C and 90% RH. Among them, the moisture absorption performance of M1 zinc oxide gel is better than M2 and M3, and also better than M4 silica gel/glycerol composite.

After 100 hours of absorbing moisture, the moisture absorption of M1 zinc oxide gel reaches 42%, and the moisture absorption of M2 is 34%. The moisture absorption of M4 silica gel/glycerol composite is 36%, which is 2% more than M2. This is mainly because after the addition of glycerol, the saturated vapor pressure of silica gel is reduced, which can absorb water faster. After 100 hours, the moisture absorption of M3 reaches 8%, and the moisture absorption is the smallest. Because of its large pore size, it will also release moisture while absorbing moisture.

After 240 hours, the moisture absorption of M1 is the largest, reaching 75%. It is followed by M2 of which the moisture absorption is 54%. The moisture absorption of M3 is 42%. Because of the limited size of silica gel pores, after glycerol is adsorbed inside, the volume that can be used for water storage becomes smaller. The last is M4 of which the moisture absorption is 12%. The inventors believe that the above result is mainly because the zinc oxide gel contains a large amount of hydrophilic groups.

FIG. 3 shows a schematic diagram of the desorption performance comparison among the zinc oxide gel and other three materials. Among them, M1 is a zinc oxide gel material, M2 and M3 are mesoporous silica gel (pore size is about 4nm to 7nm) and macroporous silica gel (pore size is about 7nm to 10nm), and M4 is a silica gel/glycerol composite material.

A regeneration rate is defined as the percentage of water desorbed by a certain mass of the material to the original saturated water. As shown in FIG. 3, at a temperature of 70°C, M1 has the fastest regeneration speed. After 24 hours, the regeneration rate is 67%. Followed by M2, its regeneration rate is 60%. The main reason is that high temperature accelerates water decomposition and absorption. At the same time, due to the large moisture absorption of M1 and M2, the regeneration rate is high. M3 has a regeneration rate of 39% at 24 hours, while the regeneration rate of M4 is only 18%. The regeneration rate determines the desorption performance of the hygroscopic material. When the hygroscopic material is covered on the surface of the heat exchanger, a good desorption performance is beneficial to the regeneration of the hygroscopic material.

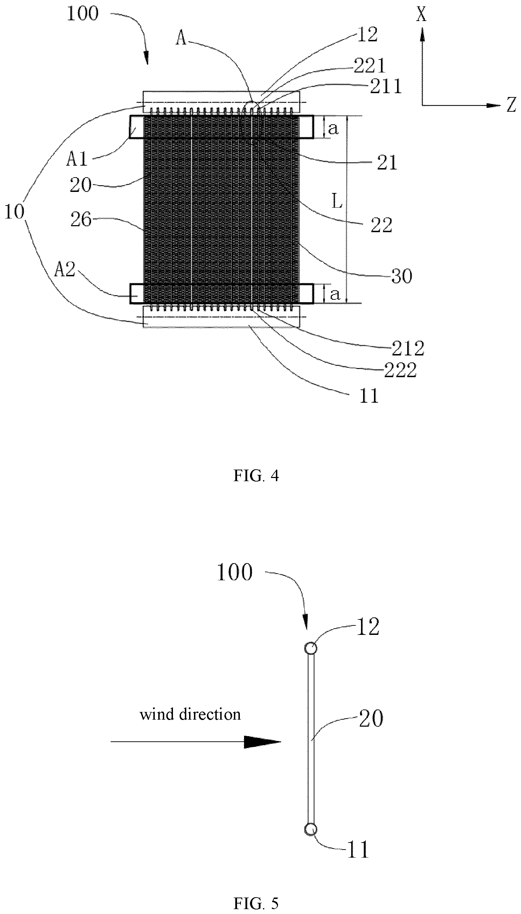

As shown in FIGS. 4 and 5, the specific implementation of the heat exchanger of the present disclosure will be described in conjunction with other figures when necessary.

The heat exchanger 100 of an embodiment of the present disclosure includes a collecting pipe 10, a plurality of heat exchange tubes 20 and at least one fin 30. The collecting pipe 10 has an inner cavity (not shown in the figure) for a refrigerant to circulate, and the shape of the collecting pipe 10 is a circular pipe. The number of the collecting pipe 10 is two, namely a first collecting pipe 11 and a second collecting pipe 12. The first collecting pipe 11 and the second collecting pipe 12 may be arranged substantially in parallel. A communication structure can be arranged between adjacent collecting pipes and flow paths can be set as needed, which is not limited here. The heat exchanger in this embodiment includes two such collecting pipes. In this embodiment, it is noted that when the heat exchanger 100 and air generally undergo heat exchange only one time, it is often referred to as a single-layer heat exchanger in the industry.

Of course, in some other embodiments, the collecting pipe 10 may also be a D-shaped or square pipe. The specific shape of the collecting pipe 10 is not limited, as long as its burst pressure meets the needs of the system. The relative position of the collecting pipe 10 is also not limited, as long as it meets the actual installation requirements. The collecting pipe 10 in the embodiment of the present disclosure is a round pipe as an example.

There are a plurality of the heat exchange tubes 20 which are arranged along an axial direction of the collecting pipe 10 and are arranged substantially in parallel. Each of the plurality of heat exchange tubes 20 has a first end 221 and a second end 222. As shown in FIG. 4, the heat exchange tube 20 includes a first heat exchange tube 21 and a second heat exchange tube 22 which are arranged side by side. A direction in which the first end 221 of the heat exchange tube 20 extends to the second end 222 is a length direction of the heat exchange tube. It is noted that the heat exchange tube may be a bent heat exchange tube. The length direction is not limited to a linear direction. In other words, an extension direction of the heat exchange tube may be the linear direction or a non-linear direction, which is not limited here. The first end 211 of the first heat exchange tube 21 is connected to the first collecting pipe 11. The second end 212 of the first heat exchange tube 21 is connected to the second collecting pipe 12. Similarly, the first end 221 of the second heat exchange tube 22 is connected to the first collecting pipe 11. The second end 222 of the second heat exchange tube 22 is connected to the second collecting pipe 12. The first heat exchange tube 21 and the second heat exchange tube 22 are arranged substantially in parallel. The heat exchange tube 20 has an inner cavity (not shown in the figure) for the refrigerant to circulate. Such connection makes the inner cavity of the heat exchange tube 20 communicate with the inner cavity of the collecting pipe 10 so as to form a refrigerant flow channel of the heat exchanger 100 (not shown in the figure). The refrigerant can circulate in the heat exchange channel, and the heat exchange can be achieved through the heat exchanger 100.

When the heat exchanger 100 is used as an evaporator in a heat exchange system, its outer surface usually has a lower temperature. The moisture in the air is easy to condense on the surface of the evaporator, forming a water film, or further frost, which affects the heat exchange performance of the evaporator. At least partial surface of the heat exchanger is covered with the hygroscopic colloid 40. The hygroscopic colloid 40 can absorb moisture or moisture on the surface of the evaporator through its unique hygroscopic characteristics, so as to delay or avoid the formation of water film on the surface of the evaporator, and then to delay or avoid frost on the evaporator surface. Finally, the heat exchange performance of the evaporator is maintained to a certain extent, or the rapid decline of the heat exchange performance of the evaporator is delayed. It is worth noting that the surface of the heat exchanger in the related art is covered with functional materials, such as corrosion-resistant materials. Specifically, it is covered on the outer surface of the entire heat exchanger. Since the functional materials will affect the heat transfer effect, the heat transfer performance of the entire heat exchanger will decrease. However, the hygroscopic colloid 40 used in the present disclosure, due to the viscosity of the hygroscopic colloid itself, it does not have strong fluidity in a gel state after drying, so no additional binder is required. This has little effect on the heat exchange performance of the heat exchanger. The hygroscopic colloid 40 can be directly coated on a metal surface, such as a surface of aluminum or copper. The hygroscopic colloid 40 is friendly to the metal surface. The hygroscopic colloid 40 material has a large moisture absorption capacity, which is better than silica gel and its composite materials. The inventors believe that the solute properties of hygroscopic colloidal materials are stable. For example, the solute of zinc oxide gel is metal oxide zinc oxide. The solute materials are relatively friendly to metals. At the same time, metal oxides, such as zinc oxide, have good thermal conductivity. The covering on the surface of the heat exchanger can also relatively reduce the influence of the heat exchange performance of the heat exchanger. In addition, the hygroscopic colloid 40 may be covered on part of the outer surface of the heat exchanger, especially part of the fin. In other words, the hygroscopic colloid is covered on the frost-prone portions of the heat exchanger, and the hygroscopicity of the hygroscopic colloid 40 is used to delay the generation of water film or frost to a certain extent. In this way, while ensuring the heat exchange efficiency of the heat exchanger, it can also delay the attenuation of the heat exchange efficiency to a certain extent. The specific overlay structure and overlay method will be described in detail in the following description.

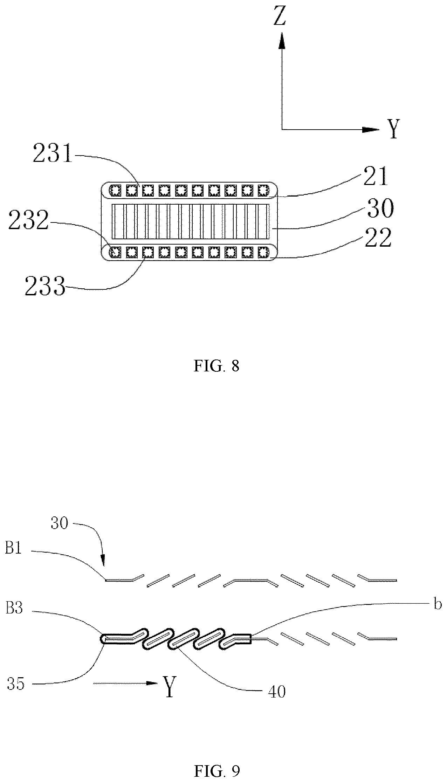

It should be noted that the heat exchange tube 20, also known as a flat tube in the industry, has an inner cavity inside for the refrigerant to circulate. As shown in FIG. 8, the inner cavity of the heat exchange tube 20 (not shown in the figure) is usually separated by ribs 231 into a plurality of refrigerant flow channels 232. With this arrangement, not only the heat exchange area of the heat exchange tube 20 is increased so that the heat exchange efficiency is improved, but also the inner surface of the heat exchange tube 20 can be provided with tiny protrusions 233 which can form a capillary effect to enhance heat exchange. Shapes of the protrusions 233 can be sawtooth, wave, triangle, etc., (not shown in the figure), and the shapes can be set as required. Adjacent channels 232 are isolated from each other. A plurality of channels 232 are arranged in a row and collectively affect a width of the heat exchange tube 20. The heat exchange tube 20 is flat as a whole, and its length is greater than its width, and its width is greater than its thickness. The heat exchange tube mentioned here is not limited to this type, and may be of other forms. For example, adjacent channels may not be completely isolated. For another example, all channels can be arranged in two rows, as long as the width is still greater than the thickness. As shown in FIGS. 4 to 10, the heat exchanger 100 of the embodiment of the present disclosure further includes the fins 30.

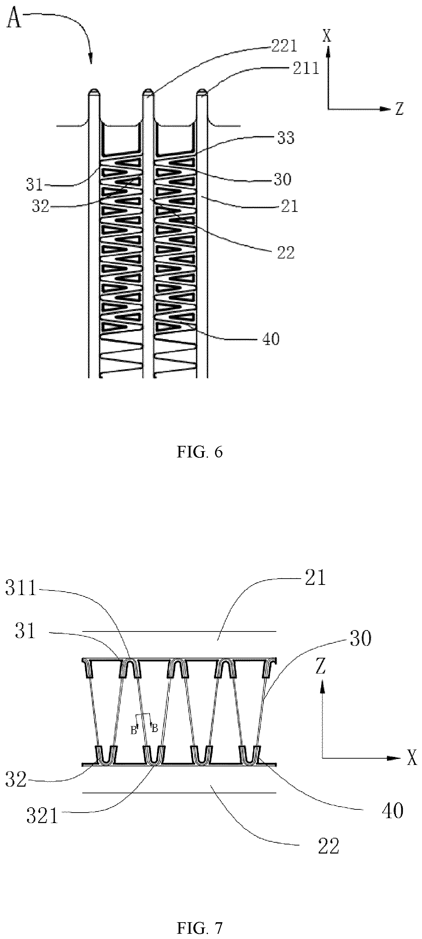

As shown in FIGS. 6 and 7, the fin 30 is a window fin and has wave crest portions 31 and wave trough portions 32. It is noted that in other embodiments, the fin may also be a fin without opening windows. The shape of the fin can be roughly corrugated, or it can be a profile. A cross section of the fin can be a sine wave or an approximate sine wave, or a sawtooth wave, as long as it meets the requirements, and its specific structure is not limited.

In the embodiment of the present disclosure, the fin 30 has a wave shape as a whole. An extension direction of the wave shape is a length direction of the heat exchange tube 20. The wave crest portions 31 and the wave trough portions 32 are arranged one by one at intervals. The fin 30 is arranged between two adjacent heat exchange tubes 20. The wave crest portions 31 are at least partially in contact with the heat exchange tube 21. The wave trough portions 32 are at least partially in contact with the heat exchange tube 22. The highest point of the wave crest portions 31 is a wave crest surface 311, and the lowest point of the wave trough portions 32 is a wave trough surface 321. The extension direction of the wave crest portions 31 and the wave trough portions 32 at intervals defining the length direction of the fin 30 (the X direction in the figure). A vertical direction between the plane of the wave crest surface 311 and the plane of the wave trough surface 321 defines the height direction of the fin (such as the Z direction in the figure). It can be seen that the length direction of the fin 30 is the same as the length direction of the heat exchange tube 20 (the X direction in the figure). A width direction of the fin 30 is the same as the width direction of the heat exchange tube 20 (the Y direction in the figure). The distance between the heat exchange tubes 20 is the height direction of the fin 30 (the Z direction in the figure).

As shown in FIG. 7, in an embodiment of the present disclosure, a part of the surface of the fin 30 is covered with the hygroscopic colloid 40. Specifically, the part of the surface is a location where the wave crest portions 31 and/or the wave trough portions 32 are covered with the hygroscopic colloid 40. The wave crest portions 31 and/or the wave trough portions 32 of the fin 30 are covered with the hygroscopic colloid 40, and the wave crest portions 31 or the wave trough portions 32 occupy 10% to 30% of the overall height of the fin 30. In other words, the wave crest portions 31 of the fin 30 extend from the wave crest surface 311 to the wave trough surface 321 to 10%-30% of the height of the fin 30. The wave crest portions 31 are covered with the hygroscopic colloid 40. The wave trough portions 32 of the fin 30 extend from the wave trough surface 321 to the wave crest surface 311 to 10% to 30% of the height of the fin 30. The wave trough portions 32 are covered with the hygroscopic colloid 40. It should be noted that the hygroscopic colloid 40 covered on the wave crest portions 31 and the wave trough portions 32 may be uniformly covered or non-uniformly covered. The covering thickness of the hygroscopic colloid is 0.07mm to 1.0mm, such as 0.1mm, 0.15mm, 0.20mm, etc. It should be noted that the thickness of the above-mentioned hygroscopic colloid 40 is approximately the thickness. Due to the limitation of the process or other conditions, it may not achieve a completely uniform covering effect, or the covering is non-uniform, which is not limited here.

As shown in the embodiment shown in FIG. 6, part of the surface of the fin 30 is covered with the hygroscopic colloid 40. That is, the area A in FIG. 4 is covered with the hygroscopic colloid 40. The partial surface covering is covering from the end of the fin 30 along the length direction of the fin 30. The covering area occupies 5% to 15% of the total length of the fin 30. In other words, along the length direction of the fin 30 (i.e., the X direction in the figure), the total length of the fin 30 is L, which is covered from the end 33 of the first end of the fin 30. The length of the part of the fin covering the hygroscopic colloid occupies 5% to 15% of the total length L of the fin 30. For example, the length of the part of the fin covering the hygroscopic colloid occupies 10% of the total length of the fin 30. With such a structure, when the heat exchanger 30 is in a vertical state during actual use, the condensed water in the air is more likely to flow from the upper fin to the lower fin under the influence of force, and accumulate in the lower fin area. While avoiding the decrease in heat exchange efficiency caused by the overall covering, it can absorb moisture in the frost-prone portions to delay frost formation, thereby delaying the rate of heat exchange performance degradation of the heat exchanger. Wherein the vertical state means that the collecting pipe 10 is arranged approximately horizontally, that is, its center line is approximately horizontal, or there is an angle with the horizontal line but the angle is small. At this time, the heat exchange tube 20 is generally arranged in the vertical state.

As shown in FIG. 9, it is a schematic diagram of the comparison before and after the fin 30 is partially covered in accordance with another embodiment of the present disclosure. Part of the surface of the fin 30 is covered with the hygroscopic colloid 40. The partial surface covering is covering from the end of the fin 30 along the width direction of the fin 30 (i.e., the Y direction in the figure). The covering area occupies 30% to 50% of the total width of the fin 30. In other words, it is covered from the end 35 of the third end of the fin 30 along the width direction of the fin 30 (i.e., the Y direction in the figure). The width of the part of the fin covering the hygroscopic colloid 40 occupies 30% to 50% of the total width of the fin 30. For example, the width of the part of the fin 30 covering the hygroscopic colloid 40 occupies 40% of the total width of the fin 30. Wherein, B1 is a schematic view of the fin 30 not being covered, and B3 is a schematic diagram of partial covering along the width direction Y The covering area occupies roughly 50% of the width of the fin 30. With such a structure, when the heat exchanger 100 is used in a horizontal state during actual use, the air inlet section is partially covered with the fin 30 to absorb water molecules in the air, which can avoid the decrease in heat exchange efficiency caused by the overall covering. The frost-prone portions (here mainly refers to the air inlet, that is, a first side of the heat exchanger 100, which is also knowns as a windward side of the heat exchanger 100) absorbs moisture and delays frosting, thereby delaying the time of the deterioration of the heat exchange performance of the heat exchanger. Wherein, the horizontal state means that the collecting pipe is arranged approximately horizontally. That is, the center line is roughly horizontal, or there is an angle with the horizontal line but the angle is small. At this time, the heat exchange tube is arranged in a generally vertical state, that is, the length direction of the heat exchange tube is roughly parallel to the X direction. Wherein, the horizontal state means that the collecting pipe is arranged substantially vertically. That is, the center line is approximately vertical, or there is an angle between the center line and the vertical line but the angle is small. At this time, the heat exchange tube is generally arranged in the horizontal state, that is, the length direction of the heat exchange tube is roughly parallel to the horizontal direction.

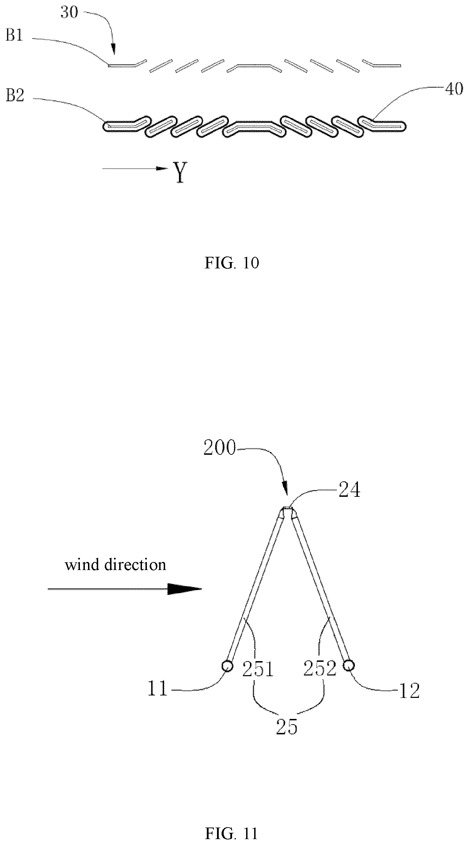

FIG. 11 shows a heat exchanger 200 according to another embodiment of the present disclosure. The heat exchanger 200 also includes a collecting pipe 10, a plurality of heat exchange tubes 20 and fins 30. The difference from the heat exchanger 100 is that the plurality of heat exchange tubes 20 of the heat exchanger 200 have a bent portion 24. As shown in FIG. 11, the heat exchanger 200 has the bent portion 24. Of course, in some other embodiments, there may be more than two bent portion 24, which can be set according to actual needs. It is noted that, when the heat exchanger 200 and air undergo heat exchange more than one time, it is often referred to as a multi-layer heat exchanger or an N-layer heat exchanger in the industry.

As shown in FIG. 11 and combined with the foregoing embodiments, taking the heat exchanger 200 as an example, the heat exchanger 200 has a first collecting pipe 11, a second collecting pipe 12, the plurality of heat exchange tubes 20 and the fins 30. The first collecting pipe 11 and the second collecting pipe 12 are arranged substantially in parallel. One end of each heat exchange tube 20 is connected to the first collecting pipe 11 and the other end is connected to the second collecting pipe 12. The inner cavities of the first collecting pipe 11, the second collecting pipe 12, and the plurality of heat exchange tubes 20 are communicated with each other so as to form a refrigerant flow channel (not shown in the figure). Each heat exchange tube 20 has the bent portion 24 and a straight tube section 25. There is one bent portion 24. There are two straight tube sections 25, namely a first straight tube section 251 and a second straight tube section 252. The fins 30 are arranged between the adjacent heat exchange tubes 20. The length direction of the fin 30 is substantially the same as the length direction of the heat exchange tube 20. Specifically, the fins 30 are arranged between the first straight tube sections 251 of the adjacent heat exchange tubes 20 and/or between the second straight tube sections 252 of the adjacent heat exchange tubes 20. Part of the surface of the fin 30 is covered with the hygroscopic colloid 40. For example, the fin 30 arranged between the first straight tube sections 251 of the heat exchange tube 20 is covered with the hygroscopic colloid 40. At the same time, the fin 30 arranged between the second straight tube sections 252 of the heat exchange tube 20 is not covered with the hygroscopic colloid 40. Alternatively, the fin 30 arranged between the first straight tube sections 251 of the heat exchange tube 20 is not covered with the hygroscopic colloid 40. At the same time, the fins 30 arranged between the second straight tube sections 252 of the heat exchange tube 20 are covered with the hygroscopic colloid 40. The above structures are all covering parts of the fin 30 of the heat exchanger 200.

It should be noted that the FPI (FPI, namely Fin Per Inch, is a unit commonly used in the industry to express the density of fins) of the fins 30 arranged between the first straight tube sections 251 of the heat exchange tube 20 and the FPI of the fins 30 between the second straight tube sections 252 of the heat exchange tube 20 may be the same or different. As shown in FIG. 8, when the heat exchanger 200 is used as an outdoor heat exchanger in an actual heat pump system, the first straight tube sections 251 serve as a first side (that is, a windward side), and the second straight tube sections 252 serve as a second side (that is, a leeward side), the fins 30 between the first straight tube sections 251 of the heat exchange tube 20 are covered with the hygroscopic colloid 40, while the fins 30 between the second straight tube sections 252 are not covered with the hygroscopic colloid 40. At the same time, the FPI of the fins 30 arranged between the first straight tube sections 251 is smaller than the FPI of the fins 30 arranged between the second straight tube sections 252. In this way, the heat transfer efficiency of the fins 30 between the first straight tube sections 251 is reduced due to the hygroscopic colloid 40 being covered, and the FPI of the fins 30 between the second straight tube sections 252 on the leeward side is increased to be compensated.

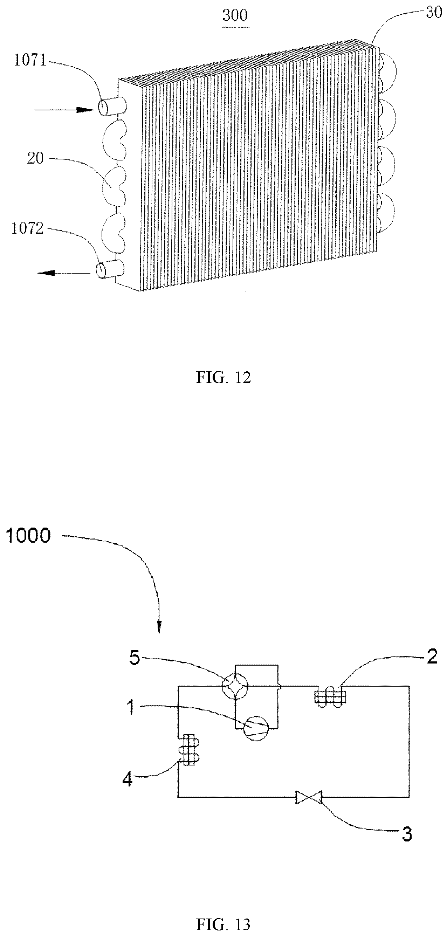

As shown in FIG. 12, this is a heat exchanger 300 according to another embodiment of the present disclosure. The heat exchanger is a tube-fin heat exchanger. The heat exchanger 300 includes heat exchange tubes 20 and fins 30, wherein the heat exchange tubes 20 are usually copper tubes. The heat exchanger is also called a copper tube fin heat exchanger. When the heat exchanger 300 is used in a heat exchange system, the refrigerant can enter the heat exchanger 300 through the first inlet and outlet 1071, exchange heat with the heat exchange tubes 20, and then flow out of the heat exchanger from the outlet 1072. The heat exchanger, as shown by the arrow in the figure, is the flow direction of the refrigerant. It should be noted that the surface of the heat exchange tubes 20 and/or the fins 30 may be covered with the hygroscopic colloid 40. The covering may be a partial covering or a complete covering. The covering method is the same as the heat exchanger 100 and the heat exchanger 200 described above. The thickness of the covering is also the same as that described above, which will not be repeated here.

It should be noted that, in the embodiment of the present disclosure, a method of making a single-layer heat exchanger and a multi-layer heat exchanger having a partial surface of the fin covered with a hygroscopic colloid is disclosed.

Taking the single-layer heat exchanger 100 as an example, the collecting pipe 10, the plurality of heat exchange tubes 20 and the heat exchange fins 30 are assembled, and then spraying is performed. That is, the sol in which the hygroscopic colloid 40 is dissolved is coated on a partial area of the surface of the heat exchanger 100 by spraying. During the spraying process, it is necessary to control the spraying of the hygroscopic colloid 40 to the area of the fins to achieve partial coverage. For example, when covering the wave crest portions 31 and/or the wave trough portions 32 of the fins 30, it can be implemented in a manner similar to spraying a slogan. That is, a solid sheet material is used to block the middle area of the fins 30 to expose the area to be sprayed, and then spraying is performed. It is ensured that only the wave crest portions31 and/or the wave trough portions 32 are covered, and the covering effect is shown in FIG. 7.

Taking the multi-layer heat exchanger 200 as an example, the collecting pipe 10, the plurality of heat exchange tubes 20 and the heat exchange fins 30 are assembled, and the first side area (that is, the windward side area) of the heat exchanger 200, the first straight tube sections 251 for example, is immersed in the sol in which the hygroscopic colloid 40 is dissolved, and then left to stand to dry. After the hygroscopic colloid 40 is tightly adsorbed on the fins 30 of the heat exchanger 200, the next step is performed as needed. The thickness of the hygroscopic colloid covering the surface of the heat exchanger 200 is 0.07mm to 1.00mm, such as 0.075mm, 0.2mm, 0.25mm, etc., so that the moisture absorption can be guaranteed. The comparison diagrams of the fins before and after covering are shown in FIGS. 9 and 10, where B1 represents an uncoated fin, B2 represents a partial coating of the fin in the width direction, and B3 represents a complete coating in the width direction of the fin. The covering thickness b is controlled by the number of immersion into the container. That is to say, if it is necessary to increase the covering thickness, it can be left to dry after being immersed, and after the hygroscopic colloid is tightly adsorbed on the fin surface of the heat exchanger 200, the above steps are repeated again. It should be noted that the thickness of the above-mentioned hygroscopic colloid 40 is approximately the thickness. Due to the limitation of the process or other conditions, it may not achieve a completely uniform overlay effect, or the overlay is non-uniform, which is not limited here.

It is noted that the above spraying method may splash on the surface of the heat exchange tubes 20 during the spraying operation. The above immersion method will inevitably cover the hygroscopic colloid 40 on the surface of the heat exchange tubes 20 during the immersion operation, which is not limited here.

As shown in FIG. 13, it is a heat exchange system 1000 shown in an exemplary embodiment of the present disclosure. The heat exchange system 1000 at least includes a compressor 1, a first heat exchanger 2, a throttling device 3, a second heat exchanger 4, and a reversing device 5. Optionally, the compressor 1 of the heat exchange system 1000 may be a horizontal compressor or a vertical compressor. Optionally, the throttling device 3 may be an expansion valve. In addition, the throttling device 3 can also be other components that have the function of reducing pressure and regulating flow of the refrigerant. The present disclosure does not specifically limit the type of the throttling device, which can be selected according to the actual application environment, and will not be repeated here. It should be noted that in some systems, the reversing device 5 may not be provided. The heat exchangers 100, 200, and 300 described in the present disclosure can be used in the heat exchange system 1000 as the first heat exchanger 2 and/or the second heat exchanger 4. In the heat exchange system 1000, the compressor 1 compresses the refrigerant, the temperature of the compressed refrigerant increases, and then it enters the first heat exchanger 2. The heat is transferred to the outside through the heat exchange between the first heat exchanger 2 and the outside. After that, the refrigerant passing through the throttling device 3 becomes a liquid state or a gas-liquid two-phase state. At this time, the temperature of the refrigerant decreases, and then the lower temperature refrigerant flows to the second heat exchanger 4, and after the second heat exchanger 4 exchanges heat with the outside, it enters the compressor 1 again to realize the refrigerant circulation. When the second heat exchanger 4 is used as an outdoor heat exchanger for heat exchange with the air, referring to the above-mentioned embodiment, the heat exchanger is arranged according to actual needs.

The foregoing descriptions are only preferred embodiments of the present disclosure, and do not impose any formal restrictions on the present disclosure. Although the present disclosure has been disclosed as above in preferred embodiments, it is not intended to limit this application. The scope of the present invention is defined in the appended claims.

## Claims

1. A heat exchanger (100), comprising a first collecting pipe (11), a second collecting pipe (12), a plurality of heat exchange tubes (20) and at least one fin (30);
the plurality of heat exchange tubes (20) respectively connecting with the first collecting pipe (11) and the second collecting pipe (12), the heat exchange tube (20) comprising a pipe wall and a refrigerant flow channel for a refrigerant to circulate, the heat exchange tube (20) comprising a first end (221) and a second end (222) along an extension direction of the heat exchange tube (20), the refrigerant flow channel extending from the first end (221) to the second end (222) along the extension direction of the heat exchange tube (20) and extending through the heat exchange tube (20), and the refrigerant flow channel of the heat exchange tube (20) communicating with an inner cavity of the first collecting pipe (11) and an inner cavity of the second collecting pipe (12);
the fin (30) being at least partially arranged between two adjacent heat exchange tubes (20); wherein the heat exchanger (100) further comprises a hygroscopic colloid (40) adhered to at least part of an outer surface of the fin (30) and optionally at least part of an outer surface of the heat exchange tube (20);
**characterized in that** the fin (30) extends along a length direction of the heat exchange tube (20), the outer surface of the fin (30) comprises a covered area and a non-covered area, the covered area is covered with the hygroscopic colloid (40), and the non-covered area is not in contact with the hygroscopic colloid (40).

2. The heat exchanger (100) according to claim 1, wherein the hygroscopic colloid (40) is zinc oxide gel, and a solute of the zinc oxide gel is nano-sized zinc oxide.

3. The heat exchanger (100) according to claim 1, wherein a pH value of the hygroscopic colloid (40) is between 6 to 8.

4. The heat exchanger (100) according to claim 1, wherein a covered thickness range of the hygroscopic colloid (40) is 0.07 mm to 1 mm.

5. The heat exchanger (100) according to any one of claims 1 to 4, wherein the first collecting pipe (11) and the second collecting pipe (12) are arranged in parallel, each of the first collecting pipe (11) and the second collecting pipe (12) has the pipe wall and the inner cavity, and the pipe wall of each collecting pipe is provided with a plurality of openings which extend through the pipe wall of the collecting pipe;
wherein the plurality of the heat exchange tubes (20) are arranged along an axial direction of the collecting pipe, the first ends (221) of the heat exchange tubes (20) are inserted into the first collecting pipe (11) through the corresponding openings, respectively, and the second ends (222) of the heat exchange tubes (20) are inserted into the second collecting pipe (12) through the corresponding openings, respectively.

6. The heat exchanger (100) according to claim 1, wherein the hygroscopic colloid (40) is covered along a width direction of the fin (30), and the covered area occupies 30% to 50% of a total width of the fin (30).

7. The heat exchanger (100) according to claim 1, wherein the hygroscopic colloid (40) is covered along a length direction of the fin (30), and the covered area occupies 5% to 15% of a total length of the fin (30).

8. The heat exchanger (100) according to claim 1, wherein the hygroscopic colloid (40) is covered along a height direction of the fin (30), and the covered area occupies 10% to 30% of a total height of the fin (30).

9. The heat exchanger (100) according to claim 5, wherein the fin (30) has a plurality of wave crest portions (31) and a plurality of wave trough portions (32), the wave crest portions (31) and the wave trough portions (32) are alternately arranged along the length direction of the fin (30), the wave crest portion (31) has a top end surface and the wave trough portion (32) has a bottom end surface; the plurality of heat exchange tubes (20) comprise a first heat exchange tube (21) and a second heat exchange tube (22) adjacent to the first heat exchange tube (21), the first heat exchange tube (21) has a first top wall and a first bottom wall along a height direction of the heat exchange tube (20), the second heat exchange tube (22) has a second top wall and a second bottom wall, the top end surface of the wave crest portion (31) is in contact with the first bottom wall of the first heat exchange tube (21), the bottom end surface of the wave trough portion (32) is in contact with the second top wall of the second heat exchange tube (22); the wave crest portion (31) and/or the wave trough portion (32) of the fin (30) are covered with the hygroscopic colloid (40); at least a partial area of the wave crest portion (31) and/or at least a partial area of the wave trough portion (32) forms the covered area; and at least a partial area of the fin (30) connected between the wave crest portion (31) and the wave trough portion (32) forms the non-covered area.

10. The heat exchanger (100) according to any one of claims 1 to 9, wherein the heat exchange tube (20) includes at least one bent portion (24) and two straight tube sections, the two straight tube sections include a first straight tube section (251) located on a first side of the bent portion (24) and a second straight tube section (252) located on a second side of the bent portion (24), the first side is a windward side, and a surface of the first straight tube section (251) is covered with the hygroscopic colloid (40).

11. The heat exchanger (100) according to any one of claims 1 to 4, wherein the heat exchange tube (20) is a heat exchange copper tube, the fin (30) is a sheet-shaped fin, the copper tube is inserted between the fins (30), and at least part of the fins (30) are arranged between the copper tubes;
wherein at least part of the surface of the fin (30) is covered with the hygroscopic colloid (40), and/or at least part of the surface of the heat exchange copper tube is covered with the hygroscopic colloid (40).

12. A heat exchange system (1000), comprising a compressor (1), at least one first heat exchanger (2), a throttling device (3) and at least one second heat exchanger (4), **characterized in that** the first heat exchanger (2) and/or the second heat exchanger (4) is the heat exchanger (100) according to any one of claims 1 to 11; when the refrigerant flows in the heat exchange system (1000), the refrigerant flows into the first heat exchanger (2) from the compressor (1), then flows into the throttling device (3) after heat exchange occurs in the first heat exchanger (2), and then flows into the second heat exchanger (4) and flows into the compressor (1) again after heat exchange occurs in the second heat exchanger (4).

## Patentansprüche

1. Wärmetauscher (100) mit einem ersten Sammelrohr (11), einem zweiten Sammelrohr (12), mehreren Wärmetauscherrohren (20) und mindestens einer Rippe (30);
wobei die mehreren Wärmetauschrohre (20) jeweils mit dem ersten Sammelrohr (11) und dem zweiten Sammelrohr (12) verbunden ist, das Wärmetauscherrohr (20) eine Rohrwand und einen Kältemittelströmungskanal für den Umlauf eines Kältemittels aufweist, das Wärmetauscherrohr (20) in Erstreckungsrichtung des Wärmetauscherrohrs (20) ein erstes Ende (221) und ein zweites Ende (222) aufweist, sich der Kältemittelströmungskanal in der Erstreckungsrichtung des Wärmetauscherrohrs (20) von dem ersten Ende (221) zu dem zweiten Ende (222) und durch das Wärmetauscherrohr (20) erstreckt, und der Kältemittelströmungskanal des Wärmetauscherrohrs (20) mit einem inneren Hohlraum des ersten Sammelrohrs (11) und einem inneren Hohlraum des zweiten Sammelrohrs (12) kommuniziert;
wobei die Rippe (30) zumindest teilweise zwischen zwei benachbarten Wärmetauscherrohren (20) angeordnet ist;
wobei der Wärmetauscher (100) ferner ein hygroskopisches Kolloid (40) aufweist, das an zumindest einem Teil einer Außenfläche der Rippe (30) und optional an zumindest einem Teil einer Außenfläche des Wärmetauscherrohrs (20) haftet;
**dadurch gekennzeichnet, dass** sich die Rippe (30) entlang einer Längenrichtung des Wärmetauscherrohrs (20) erstreckt, die Außenfläche der Rippe (30) einen bedeckten Bereich und einen nicht bedeckten Bereich aufweist, der bedeckte Bereich mit dem hygroskopischen Kolloid (40) bedeckt ist, und der nicht bedeckte Bereich nicht in Kontakt mit dem hygroskopischen Kolloid (40) steht.

2. Wärmetauscher (100) nach Anspruch 1, bei welchem das hygroskopische Kolloid (40) Zinkoxidgel ist, und ein Solut des Zinkoxidgels Zinkoxid in Nanogröße ist.

3. Wärmetauscher (100) nach Anspruch 1, bei welchem ein pH-Wert des hygroskopischen Kolloids (40) zwischen 6 und 8 beträgt.

4. Wärmetauscher (100) nach Anspruch 1, bei welchem ein Bedeckungsdickenbereich des hygroskopischen Kolloids (40) 0,07 mm bis 1 mm beträgt.

5. Wärmetauscher (100) nach einem der Ansprüche 1 bis 4, bei welchem das erste Sammelrohr (11) und das zweite Sammelroh (12) parallel angeordnet sind, wobei sowohl das erste Sammelrohr (11) als auch das zweite Sammelrohr (12) die Rohrwand und den inneren Hohlraum aufweist, und die Rohrwand jedes Sammelrohrs mit mehreren Öffnungen versehen ist, die sich durch die Rohrwand des Sammelrohrs erstrecken;
wobei die mehreren Wärmetauscherrohre (20) entlang einer axialen Richtung des Sammelrohrs angeordnet sind, die ersten Enden (221) der Wärmetauscherrohre (20) durch die entsprechenden Öffnungen in das erste Sammelrohr (11) eingesetzt sind, und die zweiten Enden (222) der Wärmetauscherrohre (20) durch die entsprechenden Öffnungen in das zweite Sammelrohr (12) eingesetzt sind.

6. Wärmetauscher (100) nach Anspruch 1, bei welchem das hygroskopische Kolloid (40) entlang einer Breitenrichtung der Rippe (30) bedeckend aufgebracht ist, und der bedeckte Bereich 30% bis 50% einer Gesamtbreite der Rippe (30) einnimmt.

7. Wärmetauscher (100) nach Anspruch 1, bei welchem das hygroskopische Kolloid (40) entlang einer Längenrichtung der Rippe (30) bedeckend aufgebracht ist, und der bedeckte Bereich 5% bis 15% einer Gesamtlänge der Rippe (30) einnimmt.

8. Wärmetauscher (100) nach Anspruch 1, bei welchem das hygroskopische Kolloid entlang einer Höhenrichtung der Rippe (30) bedeckend aufgebracht ist, und der bedeckte Bereich 10% bis 30% einer Gesamthöhe der Rippe (30) einnimmt.

9. Wärmetauscher nach Anspruch 5, bei welchem die Rippe (30) mehrere Wellenbergbereiche (31) und mehrere Wellentalbereiche (32) aufweist, die Wellenbergbereiche (31) und die Wellentalbereiche (32) abwechselnd entlang der Längenrichtung der Rippe (30) angeordnet sind, der Wellenbergbereich (31) eine obere Endfläche aufweist und der Wellentalbereich (32) eine untere Endfläche aufweist, wobei die mehreren Wärmetauscherrohre (20) ein erstes Wärmetauscherrohr (21) und ein dem ersten Wärmetauscherrohr (21) benachbartes zweites Wärmetauscherrohr (22) aufweisen, das erste Wärmetauscherrohr (21) eine erste Oberwand und eine erste Bodenwand entlang einer Höhenrichtung des Wärmetauscherrohrs (20) aufweist, das zweite Wärmetauscherrohr (22) eine zweite Oberwand und eine zweite Bodenwand aufweist, die obere Endfläche des Wellenbergbereichs (31) in Kontakt mit der ersten Bodenwand des ersten Wärmetauscherrohrs (21) ist, die untere Endfläche des Wellentalbereichs (32) in Kontakt mit der zweiten Oberwand des zweiten Wärmetauscherrohrs (22) ist, der Wellenbergbereich (31) und/oder der Wellentalbereich (32) der Rippe (30) mit dem hygroskopischen Kolloid (40) bedeckt sind, mindestens ein Teilbereich des Wellenbergbereichs (31) und/oder mindestens ein Teilbereich des Wellentalbereichs (32) den bedeckten Bereich bildet; und mindestens ein Teilbereich der Rippe (30), der zwischen dem Wellenbergbereich (31) und dem Wellentalbereich (32) verbunden ist, den nicht bedeckten Bereich bildet.

10. Wärmetauscher (100) nach einem der Ansprüche 1 bis 9, bei welchem das Wärmetauscherrohr (20) mindestens einen gebogenen Bereich (24) und zwei gerade Rohrabschnitte aufweist, die beiden geraden Rohrabschnitte einen ersten geraden Rohrabschnitt (241), der auf einer ersten Seite des gebogenen Bereichs (24) angeordnet ist, und einen zweiten geraden Rohrabschnitt (252), der auf einer zweiten Seite des gebogenen Bereichs (24) angeordnet ist, aufweisen, und eine Fläche des ersten geraden Rohrabschnitts (251) mit dem hygroskopischen Kolloid (40) bedeckt ist.

11. Wärmetauscher (100) nach einem der Ansprüche 1 bis 4, bei welchem das Wärmetauscherrohr (20) ein Kupfer-Wärmetauscherrohr ist, die Rippe (30) eine bahnförmige Rippe ist, das Kupferrohr zwischen den Rippen (30) eingesetzt ist, und zumindest ein Teil der Rippen (30) zwischen den Kupferrohren angeordnet ist;
wobei zumindest ein Teil der Fläche der Rippe (30) mit dem hygroskopischen Kolloid (40) bedeckt ist, und/oder zumindest ein Teil der Fläche des Kupfer-Wärmetauscherrohres mit dem hygroskopischen Kolloid (40) bedeckt ist.

12. Wärmetauschsystem (1000) mit einem Kompressor (1), mindestens einem ersten Wärmetauscher (2), einer Drosselvorrichtung (3) und mindestens einem zweiten Wärmetauscher (4), **dadurch gekennzeichnet, dass** der erste Wärmetauscher (2) und/oder der zweite Wärmetauscher (4) der Wärmetauscher (100) nach einem der Ansprüche 1 bis 11 ist, wobei, wenn das Kältemittel in dem Wärmetauschsystem (1000) strömt, das Kältemittel von dem Kompressor (1) in den ersten Wärmetauscher (2) strömt, sodann, nach einem Wärmetausch in dem ersten Wärmetauscher (2), in die Drosselvorrichtung (3) strömt, und danach in den zweiten Wärmetauscher (4) strömt, und nach einem Wärmetausch in dem zweiten Wärmetauscher (4) wieder in den Kompressor (1) strömt.

## Revendications

1. Échangeur de chaleur (100) comprenant un premier tuyau collecteur (11), un second tuyau collecteur (12), une pluralité de tubes d'échange de chaleur (20) et au moins une ailette (30) ;
la pluralité de tubes d'échange de chaleur (20) se raccordant respectivement au premier tuyau collecteur (11) et au second tuyau collecteur (12), le tube d'échange de chaleur (20) comprenant une paroi de tuyau et un canal d'écoulement de réfrigérant pour la circulation d'un réfrigérant, le tube d'échange de chaleur (20) comprenant une première extrémité (221) et une seconde extrémité (222) le long d'une direction d'extension du tube d'échange de chaleur (20), le canal d'écoulement de réfrigérant s'étendant de la première extrémité (221) à la seconde extrémité (222) le long de la direction d'extension du tube d'échange de chaleur (20) et s'étendant à travers le tube d'échange de chaleur (20), et le canal d'écoulement de réfrigérant du tube d'échange de chaleur (20) communiquant avec une cavité intérieure du premier tuyau collecteur (11) et une cavité intérieure du second tuyau collecteur (12) ;
l'ailette (30) étant au moins partiellement agencée entre deux tubes d'échange de chaleur adjacents (20) ;
dans lequel l'échangeur de chaleur (100) comprend en outre un colloïde hygroscopique (40) adhérant à au moins une partie d'une surface extérieure de l'ailette (30) et éventuellement à au moins une partie d'une surface extérieure du tube d'échange de chaleur (20) ;
**caractérisé en ce que** l'ailette (30) s'étend le long d'une direction longitudinale du tube d'échange de chaleur (20), la surface extérieure de l'ailette (30) comprend une zone couverte et une zone non couverte, la zone couverte est recouverte par le colloïde hygroscopique (40) et la zone non couverte n'est pas en contact avec le colloïde hygroscopique (40).

2. Échangeur de chaleur (100) selon la revendication 1, dans lequel le colloïde hygroscopique (40) est un gel d'oxyde de zinc, et un soluté du gel d'oxyde de zinc est un oxyde de zinc de taille nanométrique.

3. Échangeur de chaleur (100) selon la revendication 1, dans lequel le pH du colloïde hygroscopique (40) est compris entre 6 et 8.

4. Échangeur de chaleur (100) selon la revendication 1, dans lequel une plage d'épaisseur couverte du colloïde hygroscopique (40) va de 0,07 mm à 1 mm.

5. Échangeur de chaleur (100) selon l'une quelconque des revendications 1 à 4, dans lequel le premier tuyau collecteur (11) et le second tuyau collecteur (12) sont agencés en parallèle, chacun du premier tuyau collecteur (11) et du second tuyau collecteur (12) a la paroi de tuyau et la cavité intérieure, et la paroi de tuyau de chaque tuyau collecteur est pourvue d'une pluralité d'ouvertures qui s'étendent à travers la paroi de tuyau du tuyau collecteur ;
dans lequel la pluralité de tubes d'échange de chaleur (20) sont agencés le long d'une direction axiale du tuyau collecteur, les premières extrémités (221) des tubes d'échange de chaleur (20) sont insérées dans le premier tuyau collecteur (11) à travers les ouvertures correspondantes, respectivement, et les secondes extrémités (222) des tubes d'échange de chaleur (20) sont insérées dans le second tuyau collecteur (12) à travers les ouvertures correspondantes, respectivement.

6. Échangeur de chaleur (100) selon la revendication 1, dans lequel le colloïde hygroscopique (40) est recouvert le long d'une direction de largeur de l'ailette (30), et la zone couverte occupe 30 % à 50 % d'une largeur totale de l'ailette (30).

7. Échangeur de chaleur (100) selon la revendication 1, dans lequel le colloïde hygroscopique (40) est recouvert le long d'une direction longitudinale de l'ailette (30), et la zone couverte occupe 5 % à 15 % d'une longueur totale de l'ailette (30).

8. Échangeur de chaleur (100) selon la revendication 1, dans lequel le colloïde hygroscopique (40) est recouvert le long d'une direction de hauteur de l'ailette (30), et la zone couverte occupe 10 % à 30 % d'une hauteur totale de l'ailette (30).

9. Échangeur de chaleur (100) selon la revendication 5, dans lequel l'ailette (30) a une pluralité de parties de crête d'onde (31) et une pluralité de parties de creux d'onde (32), les parties de crête d'onde (31) et les parties de creux d'onde (32) sont agencées alternativement le long de la direction longitudinale de l'ailette (30), la partie de crête d'onde (31) a une surface d'extrémité supérieure et la partie de creux d'onde (32) a une surface d'extrémité inférieure ; la pluralité de tubes d'échange de chaleur (20) comprend un premier tube d'échange de chaleur (21) et un second tube d'échange de chaleur (22) adjacent au premier tube d'échange de chaleur (21), le premier tube d'échange de chaleur (21) a une première paroi supérieure et une première paroi inférieure le long d'une direction de hauteur du tube d'échange de chaleur (20), le second tube d'échange de chaleur (22) a une seconde paroi supérieure et une seconde paroi inférieure, la surface d'extrémité supérieure de la partie de crête d'onde (31) est en contact avec la première paroi inférieure du premier tube d'échange de chaleur (21), la surface d'extrémité inférieure de la partie de creux d'onde (32) est en contact avec la seconde paroi supérieure du second tube d'échange de chaleur (22) ; la partie de crête d'onde (31) et/ou la partie de creux d'onde (32) de l'ailette (30) sont recouvertes par le colloïde hygroscopique (40) ; au moins une zone partielle de la partie de crête d'onde (31) et/ou au moins une zone partielle de la partie de creux d'onde (32) forme la zone couverte ; et au moins une zone partielle de l'ailette (30) reliée entre la partie de crête d'onde (31) et la partie de creux d'onde (32) forme la zone non couverte.

10. Échangeur de chaleur (100) selon l'une quelconque des revendications 1 à 9, dans lequel le tube d'échange de chaleur (20) comporte au moins une partie courbée (24) et deux sections de tube droit, les deux sections de tube droit comportent une première section de tube droit (251) située sur un premier côté de la partie courbée (24) et une seconde section de tube droit (252) située sur un second côté de la partie courbée (24), le premier côté est un côté au vent, et une surface de la première section de tube droit (251) est recouverte par le colloïde hygroscopique (40).

11. Échangeur de chaleur (100) selon l'une quelconque des revendications 1 à 4, dans lequel le tube d'échange de chaleur (20) est un tube de cuivre d'échange de chaleur, l'ailette (30) est une ailette en forme de feuille, le tube de cuivre est inséré entre les ailettes (30), et au moins une partie des ailettes (30) sont agencées entre les tubes de cuivre ;
dans lequel au moins une partie de la surface de l'ailette (30) est recouverte par le colloïde hygroscopique (40), et/ou au moins une partie de la surface du tube de cuivre d'échange de chaleur est recouverte par le colloïde hygroscopique (40).

12. Système d'échange de chaleur (1000), comprenant un compresseur (1), au moins un premier échangeur de chaleur (2), un dispositif d'étranglement (3) et au moins un second échangeur de chaleur (4), **caractérisé en ce que** le premier échangeur de chaleur (2) et/ou le second échangeur de chaleur (4) est l'échangeur de chaleur (100) selon l'une quelconque des revendications 1 à 11 ; lorsque le réfrigérant s'écoule dans le système d'échange de chaleur (1000), le réfrigérant s'écoule dans le premier échangeur de chaleur (2) à partir du compresseur (1), puis s'écoule dans le dispositif d'étranglement (3) après l'échange de chaleur dans le premier échangeur de chaleur (2), et puis s'écoule dans le second échangeur de chaleur (4) et s'écoule à nouveau dans le compresseur (1) après l'échange de chaleur dans le second échangeur de chaleur (4).
